# EUROPEAN PATENT APPLICATION

(11) **EP 4 790 630 A1**
(43) Date of publication of application: **12.08.2026**
(21) Application number: 26156588.1
(22) Date of filing: 05.02.2026
(51) Int. Cl.: G06Q 40/08

(54) **CLAIMS REVIEW METHOD AND SYSTEM**

(30) Priority: 06.02.2025 CN 202510134165
(71) Applicant: Alipay (Hangzhou) Digital Service Technology Co., Ltd., Hangzhou, Zhejiang 310000 (CN)
(72) Inventor: NIU, Ke, Hangzhou, Zhejiang, 310000 (CN); SUN, Qin, Hangzhou, Zhejiang, 310000 (CN); ZHANG, Shiyu, Hangzhou, Zhejiang, 310000 (CN)
(74) Representative: Winter, Brandl - Partnerschaft mbB

(57) **Abstract**

Embodiments of the present specification provide a claims review method and system. In the method, case information of a target case is obtained in response to a claim request submitted by a user for the target case in an interactive interface; an adjustment operation and a claim assessment operation are performed in parallel based on the case information, to obtain an adjustment result and a claim assessment result, and when it is determined that second-level review is supported for the target case, that the second-level review is supported for the target case is prompted in the interactive interface; and a review result of the second-level review is determined based on the claim assessment result and the adjustment result, and the review result of the target case is presented in the interactive interface.

## Description

### TECHNICAL FIELD

This specification relates to the field of Internet technologies, and in particular, to a claims review method and system.

### BACKGROUND

Nowadays, more users choose to buy insurance. When suffering personal damage or property damage, a user may initiate a claim request to a claims service provider to obtain economic compensation. After receiving the claim request, the claims service provider performs claim review on the case actually happened to the user, to notify the user whether claims are provided. With rapid development of the insurance industry and intensification of market competition, high efficiency of claims review has become an important scale for measuring a claims service level.

However, the claims review involves a large number of complex operations such as information checking and responsibility determining, and usually needs involvement of reviewers. Therefore, the claims review is restricted by a plurality of factors such as the number of reviewers and professional abilities, and consumes relatively long time, affecting user experience.

The content of the background part is merely information known by the inventor, does not represent that the foregoing information has entered the public field before the filing date of this disclosure, and does not represent that the information may become the prior art of this disclosure.

### SUMMARY

This specification provides a claims review method and system. A user can be instantly notified whether second-level review is supported for a submitted case in short time. For a case that meets a second-level review condition, the user can be notified of a review result within a second-level duration, thereby improving review efficiency and improving user experience.

According to a first aspect, this specification provides a claims review method, including: obtaining case information of a target case in response to a claim request submitted by a user for the target case in an interactive interface; performing an adjustment operation and a claim assessment operation in parallel based on the case information to obtain an adjustment result and a claim assessment result, where the adjustment result at least represents a claim amount of the target case, and the claim assessment result at least represents whether second-level review is supported for the target case and whether claims in the target case are supported; and when determining, based on the claim assessment result, that the second-level review is supported for the target case, prompting, in the interactive interface, that the second-level review is supported for the target case, determining a review result of the second-level review based on the claim assessment result and the adjustment result, and presenting the review result in the interactive interface, where the review result includes whether the claims are supported and/or the claim amount, where a duration from a moment at which the claim request is submitted to a moment at which the review result is presented is a second-level duration.

In some embodiments, the case information includes adjustment certificate information and claim assessment certificate information, and the performing an adjustment operation and a claim assessment operation in parallel based on the case information, to obtain an adjustment result and a claim assessment result includes performing the following two steps in parallel: performing the adjustment operation on the adjustment certificate information by using an adjustment model to obtain the adjustment result, where the adjustment model is a pre-trained model capable of determining an adjustment result based on adjustment certificate information; and performing the claim assessment operation on the claim assessment certificate information by using a claim assessment model to obtain the claim assessment result, where the claim assessment model is a pre-trained model capable of determining a claim assessment result based on claim assessment certificate information.

In some embodiments, the obtaining case information of a target case includes: obtaining a claim assessment certificate document and an adjustment certificate document of the target case based on the claim request; and performing information extraction on the claim assessment certificate document and the adjustment certificate document by using a text recognition model, to obtain the claim assessment certificate information and the adjustment certificate information.

In some embodiments, the method is applied to a claims review system, and the obtaining an adjustment certificate document of the target case based on the claim request includes one of the following: when the user has uploaded the adjustment certificate document, parsing the claim request to obtain the adjustment certificate document uploaded by the user; or when the user has not uploaded the adjustment certificate document, parsing the claim request to obtain basic information filled in by the user for the target case, and obtaining the adjustment certificate document from an external data source based on the basic information, wherein the external data source is a data source outside the claims review system.

In some embodiments, the method is applied to a claims review system, and the obtaining a claim assessment certificate document of the target case based on the claim request includes one of the following: when the user has uploaded the claim assessment certificate document, parsing the claim request to obtain the claim assessment certificate document uploaded by the user; or when the user has not uploaded the claim assessment certificate document, parsing the claim request to obtain basic information filled in by the user for the target case, and obtaining the claim assessment certificate document from an external data source based on the basic information, where the external data source is a data source outside the claims review system.

In some embodiments, the performing the adjustment operation on the adjustment certificate information by using an adjustment model to obtain the adjustment result includes: determining a case type of the target case; determining, based on the case type, a target adjustment rule corresponding to the target case; and inputting the target adjustment rule and the adjustment certificate information to the adjustment model, to obtain the adjustment result.

In some embodiments, the adjustment model is obtained in advance through training based on a plurality of pieces of first sample data, and each piece of first sample data comprises an adjustment rule and adjustment certificate information that correspond to a sample claim case.

In some embodiments, the performing the claim assessment operation on the claim assessment certificate information by using a claim assessment model to obtain the claim assessment result includes: determining a case type of the target case; determining, based on the case type, a target claim assessment rule corresponding to the target case; and inputting the target claim assessment rule and the claim assessment certificate information to the claim assessment model, to obtain the claim assessment result.

In some embodiments, the claim assessment model is obtained in advance through training based on a plurality of pieces of second sample data, and each piece of second sample data includes a claim assessment rule and claim assessment certificate information that correspond to a sample claim case.

In some embodiments, the determining a review result of the second-level review based on the claim assessment result and the adjustment result and presenting the review result in the interactive interface includes: determining a first review result of the target case based on the claim assessment result and/or the adjustment result; sending the first review result and the case information to a payer; and if a second review result has been received from the payer within a target duration specified for the second-level review, presenting the second review result in the interactive interface, where the second review result is consistent with the first review result, or the second review result is a review result obtained by the payer by correcting the first review result based on the case information.

In some embodiments, the method further includes: if the second review result has not been received from the payer within the target duration, presenting the first review result in the interactive interface.

In some embodiments, when the claim assessment result represents that the claims in the target case are not supported, the first review result includes that the claims are not supported; or when the claim assessment result represents that the claims in the target case are supported, the first review result includes that the claims are supported and the claim amount.

In some embodiments, when the first review result includes that the claims are supported and the claim amount, the first review result further includes detail content corresponding to the claim amount.

In some embodiments, when the first review result includes that the claims are not supported, the first review result further includes a basis for the conclusion that the claims are not supported.

In some embodiments, the determining, based on the claim assessment result, that the second-level review is supported for the target case includes: when the claim assessment result represents that the second-level review is supported for the target case, determining that the second-level review is supported for the target case.

In some embodiments, the adjustment result further represents a first credibility corresponding to the claim amount, the claim assessment result further represents a second credibility corresponding to whether the second-level review is supported, and the method further includes: determining a comprehensive credibility based on the first credibility and the second credibility; and the determining, based on the claim assessment result, that the second-level review is supported for the target case includes: when the comprehensive credibility is greater than or equal to a preset threshold, and the claim assessment result represents that the second-level review is supported for the target case, determining that the second-level review is supported for the target case.

In some embodiments, the method further includes: when determining, based on the claim assessment result, that the second-level review is not supported for the target case, prompting, in the interactive interface, that the second-level review is not supported for the target case, and prompting that the user does not need to wait online for the review result.

According to a second aspect, this specification further provides a system, including: at least one storage medium, storing at least one instruction set; and at least one processor, communicatively connected to the at least one storage medium, where the at least one processor, when running, reads the at least one instruction set, and performs, according to instruction of the at least one instruction set, the claims review method according to the first aspect.

Other functions of the claims review method and system provided in this specification are partially listed in the following descriptions. The creative aspects of the claims review method and system provided in this specification may be fully explained by practicing or using the methods, systems, and combinations described in the following detailed examples.

### BRIEF DESCRIPTION OF THE DRAWINGS

To describe the technical solutions in the embodiments of the present specification more clearly, the following briefly describes the accompanying drawings required for describing the embodiments. Apparently, the accompanying drawings in the following description show merely some embodiments of the present specification, and a person of ordinary skill in the art may still derive other drawings from these accompanying drawings without creative efforts.
FIG. 1 is a schematic diagram of an application scenario of claims review according to an embodiment of the present specification;
FIG. 2 is a hardware structural diagram of a system according to an embodiment of the present specification;
FIG. 3 is a flowchart of a claims review method according to an embodiment of the present specification;
FIG. 4 is a schematic diagram of a claims review procedure according to an embodiment of the present specification;
FIG. 5 is a schematic diagram of change of an interactive page supporting second-level review according to an embodiment of the present specification;
FIG. 6 is a schematic diagram of another claims review procedure according to an embodiment of the present specification; and
FIG. 7 is a schematic diagram of change of an interactive page not supporting second-level review according to an embodiment of the present specification.

### DETAILED DESCRIPTION

The following descriptions provide specific application scenarios and requirements of this specification, to enable a person skilled in the art to make and use the content of this specification. For a person skilled in the art, various partial modifications on the disclosed embodiments are obvious. In addition, a general principle defined herein may be applied to other embodiments and applications without departing from the spirit and scope of this specification. Therefore, this specification is not limited to the illustrated embodiments, but to the broadest scope consistent with the claims.

The terms used herein are merely used for describing particular exemplary embodiments rather than limiting this specification. For example, unless the context clearly indicates otherwise, singular forms "a", "an", and "the" used herein may also include plural forms. When used in this specification, the terms "include", "comprise", and/or "have" indicate the presence of related integers, steps, operations, elements, and/or components, but do not exclude the presence or addition of one or more other features, integers, steps, operations, elements, components, and/or groups.

Considering the following descriptions, these features and other features, operations and functions of related elements of the structure, and economics of combination and manufacture of components in this specification can be significantly improved. Referring to the accompanying drawings, all of the accompanying drawings form a part of this specification. However, it should be clearly understood that the accompanying drawings are only used for the purpose of illustration and description, but are not intended to limit the scope of this specification. It should be further understood that, the accompanying drawings are not drawn to scale.

A flowchart used in this specification shows operations implemented by the system according to some embodiments of this specification. It should be clearly understood that operations in the flowchart may be implemented out of sequence. On the contrary, the operations may be implemented in a reverse sequence or simultaneously. In addition, one or more other operations may be added to the flowchart, or one or more operations may be removed from the flowchart.

In a conventional claims review process, when a user initiates a claim request after a target case (for example, a traffic accident, disease treatment, or a consumption matter) occurs, a user needs to submit a certificate document related to the target case to a claims review system. After obtaining the related certificate document, the claims review system can perform a plurality of links based on the related certificate document to obtain a review result of the target case. For example, the links include a link of extracting information from the related certificate document, a determining link of determining, based on extracted document information, whether claims can be supported, and a calculation link of determining a claim amount.

The claims review system is a platform that is provided by a claims service provider for a user to initiate a claim request, can collect materials and information related to a case to the user, and can also feed back a review result of the case to the user.

It should be noted that the claims review system may be the claims service provider; or may be a partner of the claims service provider, which specifically provides the claims review service for the claims service provider. The claims service provider provides an actual amount of payment to the user.

In the plurality of links, at least some links need involvement of reviewers. In an entire claims review process, coverage of links that are automatically performed by the claims review system is low, review costs are high, and time consumed is long, causing poor user experience.

In view of this, embodiments of this specification provide a claims review method and system, to shorten a review duration of a case and improve user experience.

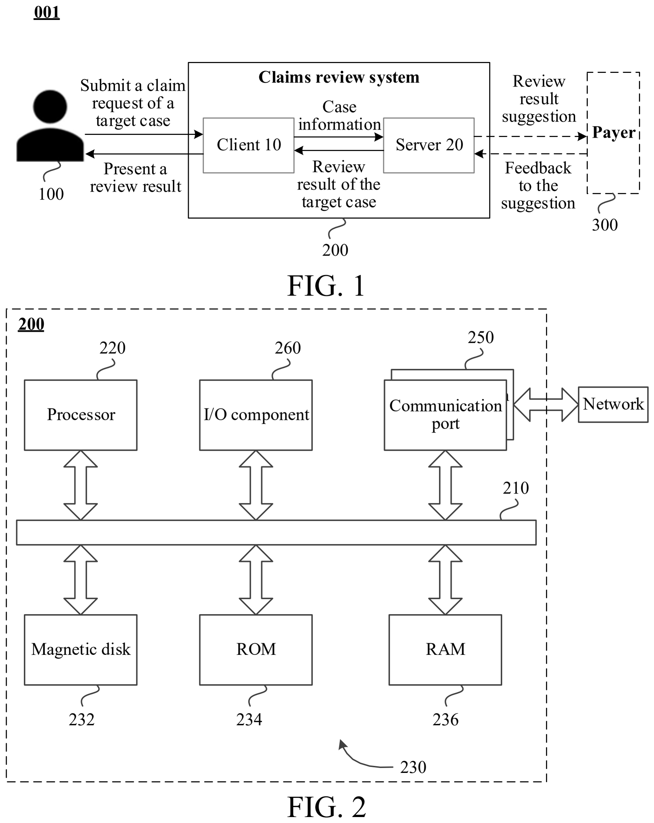

The following describes, with reference to FIG. 1, the application scenario of claims review provided in this specification.

FIG. 1 is a schematic diagram of an application scenario of claims review according to an embodiment of the present specification. As shown in FIG. 1, the application scenario 001 includes a user 100 and a claims review system 200. In some embodiments, the application scenario 001 further includes a payer 300.

The user 100 may submit a claim request on the claims review system 200 for a target case. The claims review system 200 may obtain case information of the target case based on the claim request, obtain a review result of the target case based on the case information, and display the review result to the user 100.

In some embodiments, the claims review system 200 may be an application (APP), a mini program embedded in an APP, or the like. This is not limited in this specification.

In some embodiments, the claims review system 200 includes a client 10 and a server 20, and the client 10 may be deployed on a terminal device. The terminal device may present an interactive page of the client 10 to the user 100, and the user 100 may submit a claim request for a target case on the interactive page. The client 10 may obtain case information of the target case in response to the claim request, and send the case information to the server 20. The server 20 may determine a review result of the target case based on the case information.

The terminal device may include a mobile device such as a mobile phone or a smart watch, a tablet computer, a notebook computer, a built-in device or similar content of a motor vehicle, or any combination thereof. This is not limited in this specification.

For example, the user 100 may submit a certificate document related to the target case on the client 10, and the client 10 may send the certificate document to the server 20. The service end 20 may sequentially perform a plurality of links based on the certificate document to complete claim review. The plurality of links include, but are not limited to: information extraction, information classification, information integration, external data query, claim assessment and responsibility determining, fee adjustment, conclusion integration, data synchronization, and conclusion presentation.

The information classification is, for example, classifying document information obtained through extraction after information is extracted from the certificate document. The information integration is, for example, integrating classified document information. The external data query is, for example, querying information related to the target case from a data source outside the claims review system 200. The claim assessment and responsibility determining is, for example, determining, based on integrated document information, whether a claims service provider (denoted as a payer below) needs to take indemnification responsibility for the user. Fee adjustment is, for example, when it is determined that the payer needs to take the indemnification responsibility for the user, calculating an amount of indemnification paid by the payer to the user. Conclusion integration is, for example, collating results obtained through claim assessment, responsibility determining, and fee adjustment, to obtain the review result of the target case. Data synchronization means that, for example, if the payer and the claims review system 200 do not correspond to the same party, the claims review system 200 and the payer need to synchronize the case information and review result about the target case. Conclusion presentation is, for example, presenting the review result of the target case to the user by the claims review system 200.

In this example, the claims review system 200 needs to sequentially perform the links according to a preset sequence, and can perform a next link only after a result of a previous link is obtained. Review duration accumulated in all the links is relatively long, and a risk of being unstable exists in some links, leading to prolonged review duration.

In view of this, to improve user experience, a claims review method P300 is additionally provided in the embodiments of this specification, to further shorten the review duration of claims review.

In some embodiments, the claims review system 200 may store data and instructions for implementing the claims review method P300, and may execute or be configured to execute the data and the instructions. In some embodiments, the claims review system 200 may include a hardware device having a data information processing function and a program necessary for driving the hardware device to operate.

For example, as shown in FIG. 1, when the claims review system 200 is the payer, the application scenario 001 may not include the payer 300. In this case, after determining the review result according to the method P300, the server 20 may send the review result to the client 10, and the client 10 presents the review result to the user 100.

For example, as shown in FIG. 1, when the claims review system 200 is a partner of the payer, the application scenario 001 may include the payer 300 (for example, an insurance company). In this case, as the partner of the payer 300, the claims review system 200 provides a claims review service for the payer 300, and sends a recommendation of the review result and the case information of the target case to the payer 300, and the payer 300 provides a final review result. After receiving the recommendation of the review result, the payer 300 may obtain the final review result based on the case information of the target case, and feed back the final review result to the server 20 in the claims review system 200, and the server 20 displays the final review result to the user by using the client 10.

Specifically, technical details of the claims review method P300 are described below, and are not repeated herein.

FIG. 2 is a hardware structural diagram of the claims review system 200 according to an embodiment of the present specification.

As shown in FIG. 2, the claims review system 200 may include at least one storage medium 230 and at least one processor 220. In some embodiments, the claims review system 200 may further include a communication port 250 and an internal communication bus 210. In addition, the claims review system 200 may further include an I/O component 260.

The internal communication bus 210 may connect different system components. For example, the internal communication bus 210 may connect the storage medium 230, the processor 220, the communication port 250, and the I/O component 260.

The I/O component 260 supports input/output between the claims review system 200 and other components.

The communication port 250 is used for data communication between the claims review system 200 and the outside. For example, the communication port 250 may be used for data communication between the claims review system 200 and a network. The communication port 250 may be a wired communication port or a wireless communication port.

In some embodiments, the network may be any type of wired or wireless network, or may be a combination thereof. For example, the network may include a cable network, a wired network, an optical network, a telecommunication network, an internal network, the Internet, a local area network (Local Area Network, LAN), a wide area network (Wide Area Network, WAN), a wireless local area network (Wireless Local Area Network, WLAN), a metropolitan area network (Metropolitan Area Network, MAN), a public switched telephone network (Public Switched Telephone Network, PSTN), a Bluetooth network, a ZigBee (ZigBee) network, a near field communication (Near Field Communication, NFC) network, or a similar network.

In some embodiments, the network may include one or more network access points. For example, the network may include a wired or wireless network access point, such as a base station or an Internet exchange point. By using the access point, one or more components of each device corresponding to the claims review system 200 may connect to the network to exchange data or information.

The storage medium 230 may include a data storage apparatus. The data storage apparatus may be a non-transitory storage medium, or may be a transitory storage medium. For example, the data storage apparatus may include one or more of a magnetic disk 232, a read-only memory (ROM) 234, or a random access memory (RAM) 236. The storage medium 230 further includes at least one instruction set stored in the data storage apparatus. The instruction set may include computer program code, and the computer program code may include a program, a routine, an object, a component, a data structure, a process, a module, and the like for performing the claims review method provided in this specification.

The processor 220 may be communicatively connected to the storage medium 230. the processor 220 is configured to execute the at least one instruction set. When the claims review system 200 is operating, the processor 220 reads the at least one instruction set, and performs, according to instruction of the at least one instruction set, the claims review method provided in this specification.

The processor 220 may be in the form of one or more processors. In some embodiments, the processor 220 may include one or more hardware processors, for example, a micro-controller, a micro-processor, a reduced instruction set computer (RISC), an application-specific integrated circuit (ASIC), an application-specific instruction set processor (ASIP), a central processing unit (CPU), a graphics processing unit (GPU), a physical processing unit (PPU), a micro-controller unit, a digital signal processor (DSP), a field programmable gate array (FPGA), an advanced RISC machine (ARM), a programmable logic device (PLD), or any circuit or processor capable of performing one or more functions, or any combination thereof.

Only to describe the problem, only one processor 220 is shown in the claims review system 200 in FIG. 2. However, it should be noted that the claims review system 200 in this specification may alternatively include a plurality of processors. Therefore, operations and/or method steps disclosed in this specification may be performed by one processor as described in this specification, or may be performed by a plurality of processors jointly. For example, if the processor 220 of the claims review system 200 in this specification performs step A and step B, it should be understood that step A and step B may alternatively be jointly or separately performed by two different processors 220 (for example, a first processor performs step A, and a second processor performs step B, or the first processor and the second processor jointly perform steps A and B).

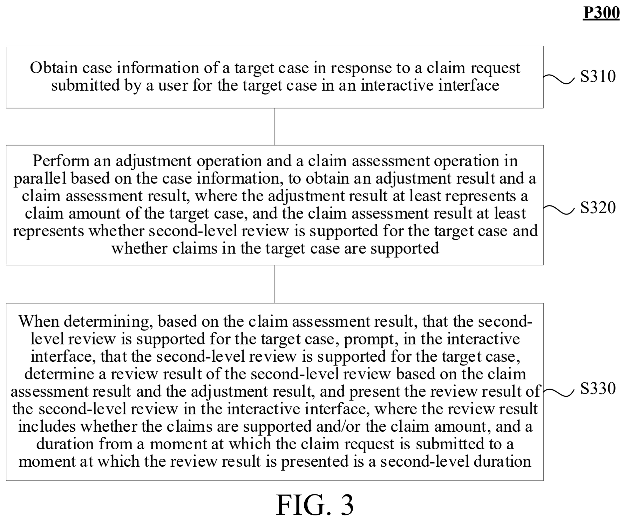

FIG. 3 is a flowchart of a claims review method P300 according to an embodiment of this specification. The claims review system 200 may perform the claims review method P300. As shown in FIG. 3, the claims review method P300 includes the following steps.

S310: Obtain case information of a target case in response to a claim request submitted by a user for the target case in an interactive interface.

The target case is an event that actually happened to the user and that needs to be claimed, for example, a traffic accident, illness treatment, or a consumption matter (for example, consumption such as a business trip or accommodations). The claim request is a behavior in which the user notifies a payer of an event status and applies for a claim. The payer is a claims service provider agreed on in a contract pre-signed by the user, and may be an insurance company or another entity that can provide reimbursement or indemnification for the user. This is not limited in this specification. The target case in this specification may be an indemnification claim case, a benefit payment claim case, a reimbursement claim case, or the like. This is not limited in this specification.

Indemnification claim case: After the user suffers an indemnification claim case, the payer economically indemnifies an actual loss suffered by the user in the case. An insurance contract corresponding to the indemnification claim case includes, but is not limited to, a contract such as property insurance or vehicle insurance.

Benefit payment claim case: After the user suffers a benefit payment claim case, the payer pays the user for a fixed amount for economic compensation, where the fixed amount is irrelevant to an actual loss of the user in the case. An insurance contract corresponding to the benefit payment claim case includes, but is not limited to, a contract such as life insurance, critical illness insurance, or accidental injury insurance.

Reimbursement claim case: After the user suffers a reimbursement claim case, the payer reimburses an actual loss of the user in the case according to an insurance contract. The insurance contract corresponding to the reimbursement claim case includes, but is not limited to, a contract such as medical insurance or partial vehicle insurance, an employment contract (including reimbursement terms such as a business trip or accommodations), or the like.

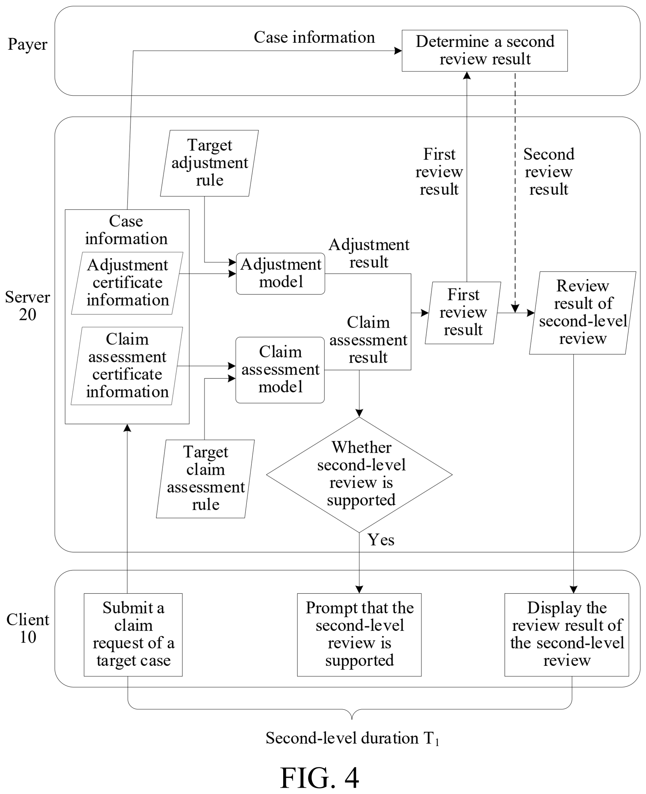

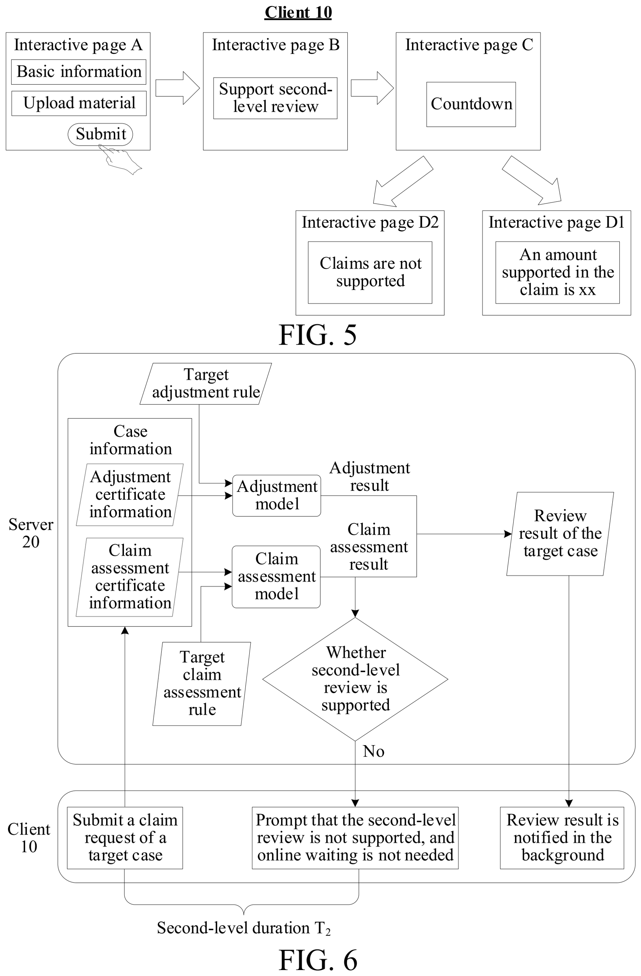

For example, as shown in FIG. 4, the user may submit the claim request for the target case on the client 10. Specifically, as shown in FIG. 5, the user may fill basic information of the target case on an interactive page A presented on the client 10, upload a certificate document required for the claim, and then submit the claim request. The basic information includes, but is not limited to, identity information of the user, payee information, occurrence time and place of the target case, and the like.

It should be noted that, an interactive page for the user to fill in the basic information and an interactive page for uploading the certificate document may be different. This is not limited in this specification.

Still referring to FIG. 4, after the user performs the submission operation, the client 10 may obtain the case information of the target case based on the claim request, and send the case information to the server 20; or the client 10 may send the claim request to the server 20, and the server 20 obtains the case information based on the claim request. The case information is related information required by the claims review system 200 when performing claim review on the target case, and includes, but is not limited to, the basic information and information extracted from the certificate document.

In some embodiments, the claims review system 200 obtains a claim assessment certificate document and an adjustment certificate document of the target case based on the claim request; and performs information extraction on the claim assessment certificate document and the adjustment certificate document by using a text recognition model, to obtain claim assessment certificate information and adjustment certificate information. The claim assessment certificate information and the adjustment certificate information are used as the case information of the target case. In this embodiment, the claims review system 200 performs automatic information extraction on certificate documents by using the text recognition model, so that manual participation can be reduced in an information extraction stage, information extraction efficiency is improved, and the claim review is accelerated.

The claim assessment certificate document is a material required when the claims review system 200 determines whether second-level review is supported for the target case and determines whether claims in the target case are supported. The adjustment certificate document is a material required when the claims review system 200 calculates a specific amount of to be paid by the payer to the user.

Whether second-level review is supported may be understood as whether a second-level review condition is met, or whether the claims review system 200 can notify the user of the review result within second-level duration.

Whether the claims are supported may be understood as whether a claim condition is met, or whether the payer can pay the user for economic compensation.

The second-level review may be understood as that the claim review is completed in relatively short time, for example, the review is completed in second-level duration. The second-level duration may be duration of waiting online for the review result, for which the user can bear or have relatively good experience, and may be duration in a unit of second. For example, the second-level duration is any duration within one minute (min), or duration close to 1 min (a difference between the second-level duration and 1 min is less than a preset value). This is not limited in this specification.

It may be understood that when the case type of the target case is different, the claim assessment certificate document and the adjustment certificate document corresponding to the target case may also be different. For example, when the target case is the reimbursement claim case, the claim assessment certificate document includes, but is not limited to: medical record data, a diagnosis certificate, an examination report, a prescription, a medical handbook, a hospital transfer application form, or the like. The adjustment certificate document includes, but is not limited to, a medical expense invoice, a medical expense list, or the like. When the target case is a case of another type, the claim assessment certificate document and the adjustment certificate document need to be adaptively adjusted, which are not listed one by one herein.

There may be a plurality of manners in which the claims review system 200 obtains the claim assessment certificate document and the adjustment certificate document. Three of the manners are used as examples for description below.

### Manner 1:

When the user has uploaded the claim assessment certificate document and the adjustment certificate document, the claims review system 200 parses the claim request to obtain the claim assessment certificate document and the adjustment certificate document uploaded by the user.

For example, when the user fills the basic information in the interactive page presented in the client 10, the client 10 may determine, based on the basic information, whether the claim assessment certificate document and the adjustment certificate document related to the target case can be obtained from an external data source (a data source outside the claims review system 200).

If it is determined that the claim assessment certificate document and the adjustment certificate document cannot be obtained from the external data source, the client 10 may prompt, through the interactive page, the user to upload the claim assessment certificate document and the adjustment certificate document. Alternatively, if the client 10 determines that that the claim assessment certificate document and the adjustment certificate document can be obtained from the external data source, and the user refuses when being queried, through the interactive page, whether to authorize the client 10, the client 10 may prompt, through the interactive page, the user to upload the claim assessment certificate document and the adjustment certificate document.

After the user submits the claim request, the client 10 may parse the claim request to obtain the claim assessment certificate document and the adjustment certificate document.

In the manner 1, the claims review system 200 may prompt the user of a type of a document that needs to be uploaded, to avoid a problem of poor experience caused by incomplete uploading by the user and multiple supplementary uploads.

### Manner 2:

When the user has not uploaded the claim assessment certificate document and the adjustment certificate document, the claims review system 200 parses the claim request to obtain basic information filled in by the user for the target case, and obtains the claim assessment certificate document and the adjustment certificate document from an external data source based on the basic information.

For example, after obtaining the basic information filled in by the user, when the client 10 determines that the claim assessment certificate document and the adjustment certificate document can be obtained from the external data source and the user agrees to authorize the client 10, the client 10 may prompt the user to directly submit the claim request without uploading the certificate document. After the user submits the claim request, the client 10 parses the claim request to obtain the basic information, and obtains the claim assessment certificate document and the adjustment certificate document from the external data source based on the basic information.

### Manner 3:

When the user has uploaded a part of documents in the claim assessment certificate document and the adjustment certificate document, the claims review system 200 parses the claim request to obtain the part of documents and basic information filled in by the user for the target case, and obtains the other part of documents in the claim assessment certificate document and the adjustment certificate document from an external data source based on the basic information.

For example, after obtaining the basic information filled in by the user, when the client 10 determines that the part of documents can be obtained from the external data source and the user agrees to authorize the client 10, the client 10 may prompt the user to upload the part of documents and submit the claim request. After the user submits the claim request, the client 10 parses the claim request to obtain the basic information, and obtains the other part of documents from the external data source based on the basic information.

The external data source mentioned above may be one or more data sources, including, but not limited to: a data source of an official platform that provides health insurance data, medical consultation data, ticket data, an expense list, and the like. This is not limited in this specification.

In the manner 2 and the manner 3, the claims review system 200 can obtain at least a part of certificate documents from the external data source, which can reduce the number of certificate documents provided by the user, and reduce operation complexity for the user to submit the claims request, to avoid a problem that uploaded document is incomplete and accuracy of the claim review is affected because the user loses some specific documents or submits some documents incorrectly, thereby improving claim experience of the user. In addition, the manner of obtaining all certificate documents from the external data source can further avoid a risk that the user forges some certificate documents.

It should be noted that, an occasion of obtaining the certificate documents by the claims review system 200 is not limited in this specification. For example, in the manner 2 and the manner 3, when the user agrees to authorize the client and has not submitted the claim request, the client 10 may alternatively synchronously obtain, from the external data source, a certificate document that does not need to be uploaded by the user. Therefore, a link of querying the external data is preceded before the user submits the claim request, thereby further accelerating a review progress, reducing waiting time for the user to submit the claim request, and improving review efficiency.

In addition, in the foregoing three manners, the server 20 may alternatively obtain the certificate document from the external data source and the claim request. This is not limited in this specification. The server 20 may obtain the claim request from the client 10. A manner in which the server 20 obtains certificate documents based on the claim request is similar to the foregoing manner, and details are not described herein again.

The text recognition model may be a pre-trained model that can extract information such as text in the certificate document. The text recognition model is, for example, a big model, and a specific type of the text recognition model is not limited in this specification.

For example, the claims review system 200 performs automatic identification and structured information extraction on claim assessment certificate documents by using the text recognition model, to obtain document information corresponding to each document in the claim assessment certificate documents, and classifies and collates document information corresponding to the documents to obtain the claim assessment certificate information. The claims review system 200 performs automatic identification and structured information extraction on adjustment certificate documents by using the text recognition model, to obtain document information corresponding to each document in the adjustment certificate documents, and classifies and collates document information corresponding to the documents to obtain the adjustment certificate information.

It should be noted that, there may be one or more text recognition models. The claims review system 200 may determine a type of the certificate document based on information such as a location at which the user uploads the document, invoke a suitable text recognition model based on the type, and extract information from the corresponding certificate document.

When performing information extraction on the claim assessment certificate document and the adjustment certificate document by using the text recognition model, the claim review system 200 may sequentially perform information extraction, or may perform information extraction simultaneously. This is not limited in this specification.

For example, if the user has not uploaded the adjustment certificate document, the claim review system 200 may synchronously obtain the adjustment certificate document from the external data source in a process of parsing the claim request to obtain the claim assessment certificate document. After the claims review system 200 obtains the claim assessment certificate document through parsing, if obtaining of the adjustment certificate document is not completed, information extraction may be first performed on the claim assessment certificate document, so that the links of information extraction and external data query are simultaneously performed, thereby accelerating the review progress.

For another example, when the user uploads the claim assessment certificate document and the adjustment certificate document, the claims review system 200 may perform information extraction on the claim assessment certificate document and the adjustment certificate document at the same time.

It may be understood that, the claim assessment certificate information and the adjustment certificate information may also vary based on different types of target cases.

For example, when the target case is a reimbursement claim case, the claim assessment certificate information corresponding to the target case includes, but is not limited to: a medical treatment type, hospital information, a hospital visit time, a disease diagnosis, a past medical history, a claim history, and the like. The adjustment certificate information includes, but is not limited to, ticket header information, ticket issue information, a name of an expense item, and a quantity, a unit price, and a total amount in each expense, and the like. Claim assessment certificate information and adjustment certificate information corresponding to other types of cases may be adjusted accordingly, and are not listed one by one.

S320: Perform an adjustment operation and a claim assessment operation in parallel based on the case information, to obtain an adjustment result and a claim assessment result. The adjustment result at least represents a claim amount of the target case, and the claim assessment result at least represents whether second-level review is supported for the target case and whether claims in the target case are supported.

Being performed in parallel may be understood as that the adjustment operation and the claim assessment operation do not depend on and affect each other, and the two operations can be performed independently. For example, the claims review system 200 may perform the adjustment operation by using a first thread, and perform the claim assessment operation by using a second thread. The adjustment operation does not need to be performed in dependence on an execution result of the claim assessment operation, and the claim assessment operation does not need to be performed in dependence on an execution result of the adjustment operation. Execution periods of the adjustment operation and the claim assessment operation may completely or partially overlap.

In some embodiments, the claims review system 200 may perform in parallel the adjustment operation on the adjustment certificate information in the case information by using an adjustment model to obtain the adjustment result, and perform the claim assessment operation on the claim assessment certificate information in the case information by using a claim assessment model to obtain the claim assessment result. The adjustment model is a pre-trained model capable of determining an adjustment result based on adjustment certificate information. The claim assessment model is a pre-trained model capable of determining a claim assessment result based on claim assessment certificate information.

In this embodiment, the models specifically for the adjustment operation and the claim assessment operation are trained in advance, so that accuracy of the claim review can be improved. In addition, the adjustment operation and the claim assessment operation are performed in parallel, so that a waiting delay in a serial execution process can be avoided, a claim review duration can be shortened, and review efficiency can be improved.

Before the claims review system 200 performs the claim assessment operation and the adjustment operation in parallel, the adjustment model and the claim assessment model need to be obtained through training. For example, the claims review system 200 may obtain the adjustment model and the claim assessment model through training by the claims review system 200. Alternatively, another system obtains the adjustment model and the claim assessment model through training, and deploys the trained models to the claims review system 200. The following are mainly described by using training by the claims review system 200, but this specification is not limited thereto.

In some embodiments, the claims review system 200 may obtain a plurality of pieces of first sample data, and obtain the adjustment model through training based on training based on the plurality of pieces of first sample data. Each piece of first sample data includes an adjustment rule and adjustment certificate information that correspond to a sample claim case.

There may be a plurality of case types of sample claim cases corresponding to the plurality of pieces of first sample data, so that in the training process, the adjustment model can learn different adjustment rules, thereby improving applicability of the trained adjustment model. The adjustment rule may be a rule common to different types of cases, or may be a rule unique to each type of cases. This is not limited in this specification.

For each piece of first sample data, the adjustment rule corresponding to the first sample data includes, but is not limited to: a payment ratio, a type of expense that can be paid, a type of expense that cannot be paid, and the like that are agreed in a contract corresponding to the sample claim case.

The claims review system 200 may further obtain an actual claim amount corresponding to each piece of first sample data, and calculate a loss in the training process by using the actual claim amount as a label. The trained adjustment model can be obtained after a plurality of times of iterative training.

In some embodiments, the claims review system 200 may obtain a plurality of pieces of second sample data, and obtain the claim assessment model through training based on the plurality of pieces of second sample data. Each piece of second sample data includes a claim assessment rule and claim assessment certificate information that correspond to a sample claim case.

There may also be a plurality of case types of sample claim cases corresponding to the plurality of pieces of second sample data, so that in the training process, the claim assessment model can learn different claim assessment rules, thereby improving applicability of the trained claim assessment model. The claim assessment rule may be a rule common to different types of cases, or may be a rule unique to each type of cases. This is not limited in this specification.

It may be understood that the claim assessment rule includes rules in two aspects: One aspect is used by the claims review system 200 to determine whether second-level review is supported for the case, and the other aspect is used by the claims review system 200 to determine whether claims in the case are supported.

For each piece of second sample data, the claim assessment rule corresponding to the second sample data includes, but is not limited to: whether a sample claim case belongs to a case type to which the second-level review can be applied, whether a claim amount agreed on in a contract corresponding to the sample claim case belongs to an amount range to which the second-level review can be applied, responsibility division ordinances agreed on in the contract corresponding to the sample claim case, whether the sample claim case belongs to a case type range that is agreed on in the contract, whether a time at which the sample claim case is submitted belongs to a claim time range that is agreed on in the contract, whether a subject involved in the sample claim case belongs to a subject range that is agreed on in the contract, and the like.

The claims review system 200 may obtain an actual claim assessment result corresponding to each piece of second sample data, and calculate a loss in the training process by using the actual claim assessment result as a label. The trained claim assessment model can be obtained after a plurality of times of iterative training.

The adjustment model and the claim assessment model in this specification are models specifically trained for the claim scenario, and are more targeted when the adjustment operation and the claim assessment operation are performed, so that the accuracy of the claim review can be ensured.

The following describes a process in which the claims review system 200 invokes the adjustment model and the claim assessment model and then performs the adjustment operation and the claim assessment operation in parallel.

In some embodiments, the claims review system 200 determines a case type of the target case; determines, based on the case type, a target adjustment rule corresponding to the target case; and inputs the target adjustment rule and the adjustment certificate information to the adjustment model, to obtain the adjustment result.

In some embodiments, the claims review system 200 determines a case type of the target case; determines, based on the case type, a target claim assessment rule corresponding to the target case; and inputs the target claim assessment rule and the claim assessment certificate information to the claim assessment model, to obtain the claim assessment result.

In the foregoing embodiment, the claims review system 200 inputs the target adjustment rule into the adjustment model and inputs the target claim assessment rule into the claim assessment model, so that the models have an accurate and targeted basis during prediction, thereby improving accuracy of outputting results of the models.

For example, the server 20 may pre-store correspondences among different case types, different adjustment rules, and different claim assessment rules, determine the case type of the target case based on identifier information of the target case, and further determine, from the stored correspondences, a target adjustment rule and a target claim assessment rule that correspond to the case type. Alternatively, the server 20 may obtain the target adjustment rule and the target claim assessment rule from an insurance contract corresponding to the target case.

Still referring to FIG. 4, the server 20 inputs the adjustment certificate information and the target adjustment rule in the case information into the adjustment model to obtain an adjustment result outputted by the adjustment model; and simultaneously inputs the claim assessment certificate information and the target claim assessment rule in the case information to the claim assessment model, to obtain a claim assessment result outputted by the claim assessment model.

For example, the claim assessment result includes a first sub-result and a second sub-result, the first sub-result represents whether the second-level review is supported, and the second sub-result represents whether the claims are supported.

S330: When determining, based on the claim assessment result, that the second-level review is supported for the target case, prompt, in the interactive interface, that the second-level review is supported for the target case, determine a review result of the second-level review based on the claim assessment result and the adjustment result, and present the review result of the second-level review in the interactive interface. The review result includes whether the claims are supported and/or the claim amount. A duration from a moment at which the claim request is submitted to a moment at which the review result is presented is a second-level duration.

Before performing S330, the claims review system 200 needs to determine whether the second-level review is supported for the target case. There may be a plurality of determining manners. Two examples are used below, and this specification is not limited thereto.

### Manner 1:

In some embodiments, when the claim assessment result represents that the second-level review is supported for the target case, the claims review system 200 determines that the second-level review is supported for the target case; and when the claim assessment result represents that the second-level review is not supported for the target case, the claims review system 200 determines that the second-level review is not supported for the target case.

In this embodiment, the claims review system 200 may directly determine, based on the first sub-result, whether the second-level review is supported for the target case, and perform no other determining. Execution logic is simple, and the efficiency of the claim review can be further improved.

### Manner 2:

In some embodiments, the adjustment result further represents a first credibility corresponding to the claim amount, and the claim assessment result further represents a second credibility corresponding to whether the second-level review is supported. The claims review system 200 determines a comprehensive credibility based on the first credibility and the second credibility; and when the comprehensive credibility is greater than or equal to a preset threshold, and the claim assessment result represents that the second-level review is supported for the target case, determines that the second-level review is supported for the target case; or when the comprehensive credibility is greater than or equal to a preset threshold, and the claim assessment result represents that the second-level review is not supported for the target case, or when the comprehensive credibility is less than the preset threshold, determines that the second-level review is not supported for the target case.

In this embodiment, when the comprehensive credibility is not less than the preset threshold, the claims review system 200 uses the first sub-result in the claim assessment result as a basis for determining whether the second-level review is supported, and the determining result is more reliable.

For example, the first credibility may represent a credibility degree, a credibility level, or accuracy of a claim amount outputted by the adjustment model. The second credibility may represent a credibility degree, a credibility level, or accuracy of the first sub-result and the second sub-result outputted by the claim assessment model. The claims review system 200 may determine weights respectively corresponding to the first credibility and the second credibility, and perform weighted summation on the first credibility and the second credibility to obtain the comprehensive credibility.

In addition, the claims review system 200 may further preset a risk rule. When it is determined, based on the comprehensive credibility and the first sub-result in the claim assessment result, that the second-level review is supported for the target case, the claims review system 200 may further perform determining based on the risk rule. If it is determined that a risk involved in the risk rule cannot be avoided, the claims review system 200 finally determines that the second-level review is not supported for the target case; or if it is determined that a risk involved in the risk rule can be avoided, the claims review system 200 finally determines that the second-level review is supported for the target case. The risk rule includes, but is not limited to, whether a claim amount is less than or equal to an amount threshold, whether a type of the target case falls within a case type range in which a claim assessment result is obtained in short time, and the like.

It should be noted that this specification does not limit a sequence in which the claims review system 200 determines the comprehensive credibility, the first sub-result, and the risk rule.

For example, the claims review system 200 may alternatively determine the risk rule before performing determining based on the first sub-result or based on the first sub-result and the comprehensive credibility. If it is determined that the risk involved in the risk rule cannot be avoided, the claims review system 200 may directly determine that that the second-level review is not supported for the target case, and no subsequent further determining is needed, to save computing resources. If it is determined that the risk involved in the risk rule can be avoided, the claims review system 200 performs further determining based on the first sub-result or based on the first sub-result and the comprehensive credibility. For a determining manner, refer to the foregoing descriptions, and details are not described herein again.

In the foregoing manner, the claims review system 200 can determine whether the second-level review is supported for the target case. The following first describes an execution procedure of the claims review system 200 when the second-level review is supported for the target case.

Still referring to FIG. 4, when determining that the second-level review is supported for the target case, the server 20 may prompt, by using the client 10, the user that the second-level review is supported for the target case.

Specifically, referring to FIG. 5, the client 10 presents to the user on an interactive page B that the second-level review is supported, or may present the following prompt information "The review result is coming right away, please wait online" (not shown in FIG. 5) on the interactive page B. After prompting the user, the client 10 may further present a countdown to the user by using an interactive page C. The countdown may be displayed based on a second-level duration preconfigured for the claims review system 200. For example, if the preconfigured second-level duration is 10s (seconds), the countdown on the interactive page C starts from 10s.

In some embodiments, after determining that the second-level review is supported for the target case, the server 20 may determine a first review result of the target case based on the claim assessment result and/or the adjustment result.

When the claims review system 200 is a payer, the server 20 may present the first review result to the user online by using an interactive interface of the client 10. A duration from a moment at which the user submits the claim request to a moment at which the first review result is presented to the user is a second-level duration.

When the claims review system 200 is a partner of the payer, as shown in FIG. 4, the server 20 sends the first review result and the case information to the payer. After receiving the case information, the payer may determine a second review result based on the case information, and send the second review result to the server 20. If the server 20 receives the second review result from the payer within a target duration specified for the second-level review, the server 20 uses the second review result as the review result of the second-level review, and displays the review result of the second-level review online by using the interactive interface of the client 10. The target duration is less than the second-level duration. The second review result may be consistent with the first review result, or the second review result is a review result obtained by the payer by correcting the first review result based on the case information.

It should be noted that specific content fed back by the payer to the server 20 is not limited in this specification. For example, if the second review result determined by the payer is the same as the first review result, indication information such as indicating agreeing on the first review result may be fed back to the server 20 within the target duration.

The claims review system 200 may interact with the payer by using an interaction task asynchronous with the claim review task. As shown in FIG. 4, when the target duration expires and the server 20 does not receive the second review result from the payer, the server 20 uses the first review result as the review result of the second-level review, and displays the review result of the second-level review in the interactive interface of the client 10. A problem that the claims review system 200 cannot present the review result to the user because the payer does not respond in time, leading to failure of the second-level review is avoided.

Still referring to FIG. 4, the duration from the moment at which the claim request is submitted to the moment at which the review result of the second-level review is presented is the second-level duration, and the claims review system 200 can instantly notify the user of the review result of the target case in a relatively short time, thereby improving claim experience of the user.

It should be noted that, if the second sub-result in the claim assessment result represents that the claims are not supported, the server 20 may directly determine the first review result based on the claim assessment result. If the second sub-result in the claim assessment result represents that the claims are supported, the server 20 may determine the first review result based on the claim assessment result and the adjustment result.

In some embodiments, when the second sub-result in the claim assessment result represents that the claims in the target case are not supported, the first review result includes that the claims are not supported; or when the second sub-result represents that the claims in the target case are supported, the first review result includes that the claims are supported and the claim amount.

For example, when the first review result includes that the claims are supported and the claim amount, the first review result may further include detail content corresponding to the claim amount. Therefore, the claims review system 200 can record detail content of the claim amount for subsequent proofreading. The claims review system 200 may further present the detail content to the user by using an interactive page, so that the user is clearer about the detail content of the claim amount, and can comprehensively grasp specific conditions of the claim, thereby improving the claim experience of the user.

For example, when the first review result includes that the claims are not supported, the first review result further includes a basis for the conclusion that the claims are not supported. Therefore, the claims review system 200 can reversely deduce reliability of the first review result based on the basis for the conclusion, thereby more accurately presenting the review result to the user.

A content format and a content dimension of the second review result are similar to those of the first review result. Refer to the foregoing descriptions of the first review result, and details are not described herein again.

Still referring to FIG. 5, when the review result of the second-level review includes that the claims are supported and the claim amount, the client 10 may present the review result to the user by using an interactive page D1. When the review result of the second-level review includes that the claims are not supported, the client 10 may present the review result to the user by using an interactive page D2. In addition, the interactive page D1 may further present details of the claim amount to the user, and the interactive page D2 may further present to the user the basis for the conclusion that the claims are not supported (not shown in FIG. 5).

In some embodiments, when determining, based on the claim assessment result, that the second-level review is not supported for the target case, the claims review system 200 prompts, in the interactive interface, that the second-level review is not supported for the target case, and prompts that the user does not need to wait online for the review result.

Specifically, for a manner in which the server 20 determines that the second-level review are is not supported for the target case, refer to the foregoing descriptions, and details are not described herein again.

For example, as shown in FIG. 6, when determining that the second-level review is not supported for the target case, the server 20 may present, to the user by using the client 10, that the second-level review is not supported and the prompt information. Therefore, the user can learn, based on displayed content of the client 10, a review progress of the target case, whether the user needs to continue to wait online for the review result, and the like.

Still referring to FIG. 6, when determining that the second-level review is not supported for the target case, the server 20 may generate a common review task of the target case, and perform manual review or review in another manner without considering a limitation of the second-level duration. Subsequently, after obtaining the review result of the target case, the server 20 sends the review result to the client 10. The client 10 may prompt the user of the review result in a manner of background notification.

Still referring to FIG. 6, a duration from a moment at which the claim request is submitted to a moment at which the prompt information is presented to the user is a second-level duration. The claims review system 200 can instantly notify, within a short time, whether the user needs to wait online for the review result, thereby avoiding a problem that the user waits blindly in a state that the user cannot sense, and consequently affecting the claim experience.

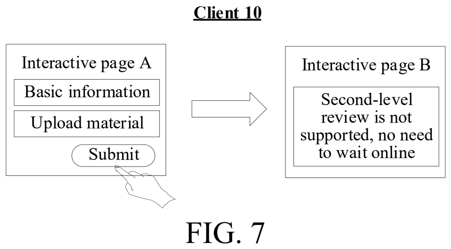

Specifically, referring to FIG. 7, when the second-level review is not supported for the target case, after submitting the claim request in an interactive page A, the user can learn, from an interactive page B within a second-level duration, prompt information such as that the second-level review is not supported for the target case and that the user does not need to continue to wait online.

It should be noted that, in the claims review method P300 provided in this specification, the adjustment operation and the claim assessment operation are parallel and do not affect each other, and therefore, some links related to the adjustment operation and some links related to the claim assessment operation can be simultaneously performed. Some links that can be simultaneously performed are exemplified above, but this specification is not limited thereto. For example, there may be other implementations that satisfy execution logic of the claims review system 200 and in which some links are performed simultaneously to shorten a review duration, and the implementations are not listed one by one.

In addition, when the claims review method P300 is introduced this specification, descriptions are mainly made by using the reimbursement claim case as an example. Therefore, specific content (such as the certificate document, the certificate information, the adjustment rule, the claim assessment rule, or the risk rule) involved is also explained by using this type of case, but this specification is not limited thereto. When the claims review method P300 is applied to cases of other types, the specific content may be adaptively adjusted based on case types of the other cases, and is not listed one by one.

In conclusion, according to the claims review method and system provided in this specification, after a user submits a claim request for a target case, an adjustment operation and a claim assessment operation can be performed in parallel based on case information of the target case, and the user can be instantly notified whether second-level review within a short time is supported for the submitted case. For a case that meets a second-level review condition, a claim review duration may be shortened to a second-level duration, and a review result of the second-level review is fed back to the user instantly. The solution provided in this specification can improve review efficiency and improve claim experience of users while ensuring accuracy of review results, and push the claims industry to advance in aspects such as review time validity and accuracy.

Another aspect of this specification provides a computer-readable non-transitory storage medium, storing at least a group of executable instructions used for performing claim review. When the executable instructions are executed by the processor, the executable instructions instruct a processor to implement steps of the method P300 in this specification. In some possible implementations, the aspects of this specification may further be implemented in a form of a program product including program code. When the program product runs in the claims review system 200, the program code is used for causing the claims review system 200 to perform the steps of the method P300 described in this specification. The program product configured to implement the foregoing method may use a compact disc read-only memory (CD-ROM), includes program code, and can be run on the claims review system 200. However, the program product in the present specification is not limited thereto. In the present specification, the readable storage medium may be any tangible medium including or storing a program, and the program may be used by or used in combination with an instruction execution system. The program product may be any combination of one or more readable mediums. The readable medium may be a computer-readable signal medium or a computer-readable storage medium. The readable storage medium may be, for example, but is not limited to, an electric, magnetic, optical, electromagnetic, infrared, or semi-conductive system, apparatus, or device, or any combination thereof. More specific examples of the readable storage medium include: an electrical connection having one or more wires, a portable disk, a hard disk, a random access memory (RAM), a read-only memory (ROM), an erasable programmable read-only memory (EPROM or a flash memory), an optical fiber, a compact disc read-only memory (CD-ROM), an optical storage device, a magnetic storage device, or any appropriate combination thereof. The computer-readable storage medium may include a data signal propagated in a baseband or as part of a carrier, in which computer-readable program code is carried. A data signal propagated in such a way may assume a plurality of forms, including, but not limited to, an electromagnetic signal, an optical signal, or any appropriate combination thereof. The readable storage medium may also be any readable medium other than the readable storage medium. The readable medium may send, propagate, or transmit a program configured to be used by or in combination with an instruction execution system, apparatus, or device. The program code embodied on the readable storage medium may be transmitted by using any suitable medium, including, but not limited to, wireless, wired, cable, radio frequency (RF), or the like, or any appropriate combination thereof. The program code used for executing the operations of the present specification may be written by using one or more programming languages or a combination thereof. The programming languages include an object-oriented programming language such as Java and C++, and also include a conventional procedural programming language such as "C" or similar programming languages. The program code may be completely executed on the claims review system 200, partially executed on the claims review system 200, executed as an independent software package, partially executed on the claims review system 200 and partially executed on a remote computing device, or completely executed on a remote computing device.

In the embodiments of the present specification, the term "and/or" describes an association relationship between associated objects and indicates that three relationships may exist. For example, A and/or B may represent the following three cases: Only A exists, both A and B exist, and only B exists. The character "/" generally indicates an "or" relationship between the associated objects.

The terms such as "first" and "second" in the present specification are intended to distinguish between similar or same objects or entities, but do not necessarily mean limiting a specific sequence or order.

Unless specially stated, "plurality of" mentioned in this specification should be understood as two or more.

Specific embodiments of the present specification are described above. Other embodiments fall within the scope of the appended claims. In some cases, the actions or steps recorded in the claims may be performed in sequences different from those in the embodiments and an expected result may still be achieved. In addition, the processes depicted in the accompanying drawings are not necessarily performed in a specific order or successively to achieve an expected result. In some implementations, multitasking and parallel processing may be feasible or beneficial.

In conclusion, after reading this detailed disclosure, a person skilled in the art may understand that the foregoing detailed disclosure may be presented by using examples only, and may not be limitative. Although not explicitly described herein, a person skilled in the art may understand that this specification requires inclusion of various proper changes, improvements, and modifications to the embodiments. These changes, improvements, and modifications are intended to be proposed in this specification, and shall fall within the spirit and scope of the exemplary embodiments of this specification.

In addition, some terms in this specification have been used to describe the embodiments of this specification. For example, "an embodiment", "embodiment", and/or "some embodiments" mean that particular features, structures, or properties described with reference to the embodiment or embodiments may be included in at least one embodiment of this specification. Therefore, it may be emphasized and should be understood that, in various parts of this specification, two or more references to "embodiment", "an embodiment", or "alternate embodiment" do not necessarily refer to the same embodiment. In addition, the specific features, structures, or properties may be combined in one or more embodiments of this specification in a proper manner.

It should be understood that, in the foregoing descriptions of the embodiments of this specification, to help understand one feature, for the purpose of simplifying this specification, various features are combined in a single embodiment, accompanying drawing, or description thereof in this specification. However, it does not mean that combination of these features is necessary, and a person skilled in the art may possibly mark some of the devices as an individual embodiment for understanding when reading this specification. In other words, the embodiment in this specification may alternatively be understood as integration of a plurality of secondary embodiments. This also holds true when content of all secondary embodiments is less than all features of the single embodiment disclosed above.

Each patent, patent application, publication of patent application, and other material such as an article, a book, a specification, a publication, a file, and a document (excluding any historical examination file related thereto) cited in the present disclosure is cited for all purposes related to the present disclosure, for example, is cited in the specification and claims of the present disclosure. However, if there is any inconsistency or conflict between use of the descriptions, definitions, and/or terms of the foregoing materials and the descriptions, definitions, and/or terms in the present disclosure, it should be subject to the descriptions, definitions, and/or terms used in the present disclosure.

Finally, it should be understood that implementation solutions of the application disclosed in this specification are merely illustrative of principles of the implementation solutions of this specification. Other modified embodiments also fall within the scope of this specification. Therefore, the embodiments disclosed in this specification are merely used as examples rather than limitations. A person skilled in the art may adopt an alternative configuration according to the embodiments in this specification to implement the application in this specification. Therefore, the embodiments of this specification are not limited to the embodiments precisely described in this application.

## Claims

1. A claims review method, comprising:
obtaining case information of a target case in response to a claim request submitted by a user for the target case in an interactive interface;
performing an adjustment operation and a claim assessment operation in parallel based on the case information to obtain an adjustment result and a claim assessment result, wherein the adjustment result at least represents a claim amount of the target case, and the claim assessment result at least represents whether second-level review is supported for the target case and whether claims in the target case are supported; and
when determining, based on the claim assessment result, that the second-level review is supported for the target case, prompting, in the interactive interface, that the second-level review is supported for the target case, determining a review result of the second-level review based on the claim assessment result and the adjustment result, and presenting the review result in the interactive interface, wherein the review result comprises whether the claims are supported and/or the claim amount, wherein
a duration from a moment at which the claim request is submitted to a moment at which the review result is presented is a second-level duration.

2. The method according to claim 1, wherein the case information comprises adjustment certificate information and claim assessment certificate information, and the performing an adjustment operation and a claim assessment operation in parallel based on the case information, to obtain an adjustment result and a claim assessment result comprises performing the following two steps in parallel:
performing the adjustment operation on the adjustment certificate information by using an adjustment model to obtain the adjustment result, wherein the adjustment model is a pre-trained model capable of determining an adjustment result based on adjustment certificate information; and
performing the claim assessment operation on the claim assessment certificate information by using a claim assessment model to obtain the claim assessment result, wherein the claim assessment model is a pre-trained model capable of determining a claim assessment result based on claim assessment certificate information.

3. The method according to claim 2, wherein the obtaining case information of a target case comprises:
obtaining a claim assessment certificate document and an adjustment certificate document of the target case based on the claim request; and
performing information extraction on the claim assessment certificate document and the adjustment certificate document by using a text recognition model, to obtain the claim assessment certificate information and the adjustment certificate information.

4. The method according to claim 3, wherein the method is applied to a claims review system, and the obtaining an adjustment certificate document of the target case based on the claim request comprises one of the following:
when the user has uploaded the adjustment certificate document, parsing the claim request to obtain the adjustment certificate document uploaded by the user; or
when the user has not uploaded the adjustment certificate document, parsing the claim request to obtain basic information filled in by the user for the target case, and obtaining the adjustment certificate document from an external data source based on the basic information, wherein the external data source is a data source outside the claims review system.

5. The method according to claim 3, wherein the method is applied to a claims review system, and the obtaining a claim assessment certificate document of the target case based on the claim request comprises one of the following:
when the user has uploaded the claim assessment certificate document, parsing the claim request to obtain the claim assessment certificate document uploaded by the user; or
when the user has not uploaded the claim assessment certificate document, parsing the claim request to obtain basic information filled in by the user for the target case, and obtaining the claim assessment certificate document from an external data source based on the basic information, wherein the external data source is a data source outside the claims review system.

6. The method according to claim 2, wherein the performing the adjustment operation on the adjustment certificate information by using an adjustment model to obtain the adjustment result comprises:
determining a case type of the target case;
determining, based on the case type, a target adjustment rule corresponding to the target case; and
inputting the target adjustment rule and the adjustment certificate information to the adjustment model, to obtain the adjustment result.

7. The method according to claim 6, wherein the adjustment model is obtained in advance through training based on a plurality of pieces of first sample data, and each piece of first sample data comprises an adjustment rule and adjustment certificate information that correspond to a sample claim case.

8. The method according to claim 2, wherein the performing the claim assessment operation on the claim assessment certificate information by using a claim assessment model to obtain the claim assessment result comprises:
determining a case type of the target case;
determining, based on the case type, a target claim assessment rule corresponding to the target case; and
inputting the target claim assessment rule and the claim assessment certificate information to the claim assessment model, to obtain the claim assessment result.

9. The method according to claim 8, wherein the claim assessment model is obtained in advance through training based on a plurality of pieces of second sample data, and each piece of second sample data comprises a claim assessment rule and claim assessment certificate information that correspond to a sample claim case.

10. The method according to claim 1, wherein the determining a review result of the second-level review based on the claim assessment result and the adjustment result and presenting the review result in the interactive interface comprises:
determining a first review result of the target case based on the claim assessment result and/or the adjustment result;
sending the first review result and the case information to a payer; and
if a second review result has been received from the payer within a target duration specified for the second-level review, presenting the second review result in the interactive interface, wherein the second review result is consistent with the first review result, or the second review result is a review result obtained by the payer by correcting the first review result based on the case information.

11. The method according to claim 10, wherein the method further comprises:
if the second review result has not been received from the payer within the target duration, presenting the first review result in the interactive interface.

12. The method according to claim 10, wherein
when the claim assessment result represents that the claims in the target case are not supported, the first review result comprises that the claims are not supported; or
when the claim assessment result represents that the claims in the target case are supported, the first review result comprises that the claims are supported and the claim amount.

13. The method according to claim 12, wherein when the first review result comprises that the claims are supported and the claim amount, the first review result further comprises detail content corresponding to the claim amount.

14. A system, comprising:
at least one storage medium, storing at least one instruction set; and
at least one processor, communicatively connected to the at least one storage medium, wherein the at least one processor, when running, reads the at least one instruction set, and performs, according to instruction of the at least one instruction set, the method according to any one of claims 1 to 13.

15. A computer-readable storage medium, wherein the computer-readable storage medium stores at least one instruction set which when read by at least one processor causes the at least one processor perform the method according to any one of claims 1 to 13.
